# EUROPEAN PATENT APPLICATION

(11) **EP 4 708 431 A2**
(43) Date of publication of application: **11.03.2026**
(21) Application number: 24815778.6
(22) Date of filing: 23.05.2024
(51) Int. Cl.: H01M 10/056, H01M 10/0565, H01M 10/0562, H01M 4/133, H01M 4/134, H01M 4/48, H01M 10/052

(54) **ELECTRODE STRUCTURE FOR LITHIUM SECONDARY BATTERY AND MANUFACTURING METHOD THEREFOR**

(30) Priority: 26.05.2023 KR 20230068399
(71) Applicant: SK On Co., Ltd., Seoul 03161 (KR)
(72) Inventor: KIM, Kyeong Joon, Daejeon 34124 (KR); PARK, Myung Soo, Daejeon 34124 (KR); KIM, Min Kyu, Daejeon 34124 (KR); LEE, Seung Hwan, Daejeon 34124 (KR); YI, Eun Jeong, Daejeon 34124 (KR)
(74) Representative: Prüfer & Partner mbB Patentanwälte · Rechtsanwälte
(86) International application number: PCT/KR2024/006971
(87) International publication number: WO 2024/248401

(57) **Abstract**

An electrode structure for a lithium secondary battery according to exemplary embodiments may comprise: a negative electrode; and a composite electrolyte layer formed on the negative electrode and including an oxide-based electrolyte and a polymer electrolyte. The oxide-based electrolyte may include a sintered body, and the volume of the oxide-based electrolyte included in the composite electrolyte layer may be more than that of the polymer electrolyte included in the composite electrolyte layer. Accordingly, a lithium secondary battery having improved capacity characteristics and lifespan characteristics can be provided.

## Description

### [TECHNICAL FIELD]

The present disclosure relates to an electrode structure for a lithium secondary battery and a method of manufacturing the same. More particularly, the present disclosure relates to an electrode structure for a lithium secondary battery including a polymer electrolyte and a method of manufacturing the same.

### [BACKGROUND ART]

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an hybrid vehicle, electric vehicle, etc.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

Currently, in a commercially available lithium secondary battery, a liquid organic electrolyte having high discharge capacity and energy density is mainly used. However, when the liquid organic electrolyte is used, leakage, explosion, ignition, etc., may be caused when being exposed to rapid environmental changes such as temperature fluctuation, external impact, etc.,

Accordingly, a solid electrolyte having high safety and reliability is being developed to replace the liquid organic electrolyte. Examples of the solid electrolyte include a polymer electrolyte and a ceramic electrolyte. However, the polymer electrolyte has low ionic conductivity, and the ceramic electrolyte may have non-uniform interfacial contact with an electrode.

### DETAILED DESCRIPTIONS OF THE INVENTION

### [Technical Objective]

According to an objective of the present disclosure, there is provided an electrode structure for a lithium secondary battery having improved stability and electrochemical property.

According to an objective of the present disclosure, there is provided a method of manufacturing an electrode structure for a lithium secondary battery having improved stability and electrochemical property.

### [Means for Resolving the Objective]

An electrode structure for a secondary battery according to example embodiments includes an anode; and a composite electrolyte layer formed on the anode, and including an oxide-based electrolyte and a polymer electrolyte, wherein the oxide-based electrolyte includes a sintered body, and a volume of the oxide-based electrolyte contained in the composite electrolyte layer is greater than a volume of the polymer electrolyte contained in the composite electrolyte layer.

In some embodiments, the oxide-based electrolyte and the polymer electrolyte may be contained in a volume ratio of 55:45 to 90:10.

In some embodiments, the oxide-based electrolyte may include at least one sintered body selected from the group consisting of an LLZO-based compound, an LLTO-based compound, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, an LAGP-based compound, a LATP-based compound, Li₁₊ₓTi₂₋ₓAlₓSi_{y}(PO₄)_{3-y} (0≤x≤1, 0≤y≤1), LiAlₓZr₂₋ₓ(PO₄)₃ (0≤x≤1, 0≤y≤1), LiTiₓZr₂₋ₓ(PO₄)₃ (0≤x≤1, 0≤y≤1), a LISICON-based compound, a LIPON-based compound, a perovskite-based compound and a NASICON-based compound.

In some embodiments, the polymer electrolyte may be polymerized by including a monomer containing a (meth)acrylate group.

In some embodiments, the polymer electrolyte may be polymerized by including at least one monomer selected from the group consisting of trimethylolpropane triacrylate, di-trimethylolpropane tetraacrylate, trimethylolpropane ethoxylate triacrylate, butanediol diacrylate, tripropylene glycol diacrylate and trimethylolpropane trimethacrylate.

In some embodiments, a porosity of the composite electrolyte layer may be in a range from 10 vol% to 50 vol%.

In some embodiments, the composite electrolyte layer may not contain carbon, and may contain at least one element selected from the group consisting of phosphorus, sulfur and fluorine.

In some embodiments, the anode may include an anode current collector and an anode active material layer formed on the anode current collector.

In some embodiments, the anode active material layer may include at least one element selected from the group consisting of a carbon-based active material and a silicon-based active material.

In some embodiments, the carbon-based active material may include at least one element selected from the group consisting of a crystalline carbon and an amorphous carbon.

In some embodiments, the silicon-based active material may include at least one selected from the group consisting of a carbon-silicon composite active material, silicon oxide (SiOx, 0<x<2) and pure silicon.

In some embodiments, a cathode disposed on the composite electrolyte layer may be further included.

In a method of manufacturing an electrode structure for a secondary battery according to example embodiments, an oxide-based electrolyte composition maybe coated on an anode. A preliminary composite electrolyte layer may be formed by sintering the coated oxide-based electrolyte composition. A composite electrolyte layer may be formed by coating a polymer electrolyte composition on the preliminary composite electrolyte layer.

In some embodiments, forming the preliminary composite electrolyte layer may include photo-sintering the coated oxide-based electrolyte composition at a temperature ranging from 400°C to 900°C.

In some embodiments, forming the composite electrolyte layer may include thermally curing the coated polymer electrolyte composition.

In some embodiments, thermally curing the polymer electrolyte composition may be performed at a temperature of 50°C to 80°C.

In some embodiments, a portion of the polymer electrolyte composition coated on the preliminary composite electrolyte layer may be impregnated into an inside of the anode.

In some embodiments, the oxide-based electrolyte composition may include an oxide-based electrolyte, a binder and a sintering aid.

In some embodiments, the polymer electrolyte composition may include a polymer electrolyte, a lithium salt and a thermal initiator.

In some embodiments, a cathode may be arranged on the composite electrolyte layer.

### [Effects of the Invention]

An electrode structure for a secondary battery according to the present disclosure may include a composite electrolyte layer formed on an anode and including an oxide-based electrolyte and a polymer electrolyte. The oxide-based electrolyte provide uniform interfacial bonding with the electrode, and the polymer electrolyte has high electrochemical stability, so that capacity and life-span properties of a secondary battery including the composite electrolyte layer may be improved.

For example, the oxide-based electrolyte may undergo a photo-sintering process. Accordingly, generation of impurities due to lithium volatilization and cracks may be suppressed, and sufficient interfacial contact between the oxide-based electrolyte and the electrode may be obtained. Thus, lithium ion conductivity and energy density of the secondary battery may be improved.

### [Brief Descriptions of the Drawings]

FIG. 1 is a schematic cross-sectional view illustrating an electrode structure for a secondary battery in accordance with example embodiments.
FIG. 2 is a schematic cross-sectional view illustrating an electrode structure for a secondary battery in accordance with example embodiments.
FIG. 3 is a schematic process flow diagram illustrating a method for manufacturing an electrode structure in accordance with example embodiments.
FIG. 4 is a schematic cross-sectional view illustrating a portion of an electrode structure in accordance with example embodiments.
FIGS. 5a and 5b are SEM images of cross-sections of an anode and a composite electrolyte layer of an electrode structure according to Example 1.
FIGS. 6a and 6b are SEM images of cross-sections of an anode and composite electrolyte layer of an electrode structure according to Comparative Example 1.
FIG. 7 shows results of an EDS (energy dispersive X-ray spectroscopy) analysis of carbon (C), sulfur (S), zirconium (Zr) and oxygen (O) from a cross-section of an anode and a composite electrolyte layer of an electrode structure according to Example 1.
FIG. 8 shows results of an EDS (energy dispersive X-ray spectroscopy) analysis of carbon (C) from a cross-section of an anode and a composite electrolyte layer of an electrode structure according to Comparative Example 1.
FIG. 9 is an SEM image of a cross-section of a composite electrolyte layer of an electrode structure according to Example 1.
FIG. 10a is a charge curve graph of secondary batteries according to Example 1 and Comparative Example 1.
FIG. 10b is a discharge curve graph of the secondary batteries according to Example 1 and Comparative Example 1.
FIG. 11 is a discharge capacity graph according to cycles of secondary batteries according to Example 1 and Comparative Example 1.
FIG. 12 is a Coulomb efficiency graph according to cycles of secondary batteries according to Example 1 and Comparative Example 1.
FIG. 13 is a photograph of an electrode structure of Comparative Example 2.

### [Implementation for Practicing the Invention]

According to embodiments of the present disclosure, an electrode structure including an anode and a composite electrolyte layer formed on the anode is provided.

According to embodiments of the present disclosure, a method of manufacturing the electrode structure is provided.

Unless otherwise defined herein, all technical and scientific terms have the same meanings as those commonly understood by those ordinarily skilled in the art to which the present disclosure pertains. The terminology used herein is merely for the purpose of effectively describing specific embodiments and is not intended to limit the present disclosure.

Hereinafter, unless otherwise defined, when a portion of, e.g., a layer, a film, a thin film, a region, a plate, etc., is referred to as being "on" or "over" another portion, this includes not only the case where the portion is "directly on" the other portion, but also the case where still another portion is present therebetween.

Unless otherwise specifically defined herein, "(meth)acryl" may be used to encompass both "methacryl" and "acryl."

In the present specification, "polymer electrolyte" may not only mean an all-solid-state electrolyte, but also a "gel polymer electrolyte" in which an electrolyte solution is included in a polymer-based electrolyte. For example, the gel polymer electrolyte may be manufactured by swelling an electrolyte after manufacturing a polymer matrix (physical gel), or by curing a composition in which an electrolyte solution and a monomer are mixed (chemical gel), depending on a manufacturing method.

Hereinafter, embodiments of the present disclosure will be described in more detail with reference to drawings. However, since embodiments provided in the present specification provide some examples and serve to further understand the technical concepts of the present disclosure together with the above-described contents of the present disclosure, the present disclosure should not be interpreted by being limited to the matters described in such embodiments.

The terms in the present specification such as "upper portion", "lower portion", "top surface", "bottom surface", "lower surface", "first", "second", etc., are used in a relative sense to distinguish the positions of elements and are not designate absolute positions.

### <Electrode Structure for Lithium Secondary Battery>

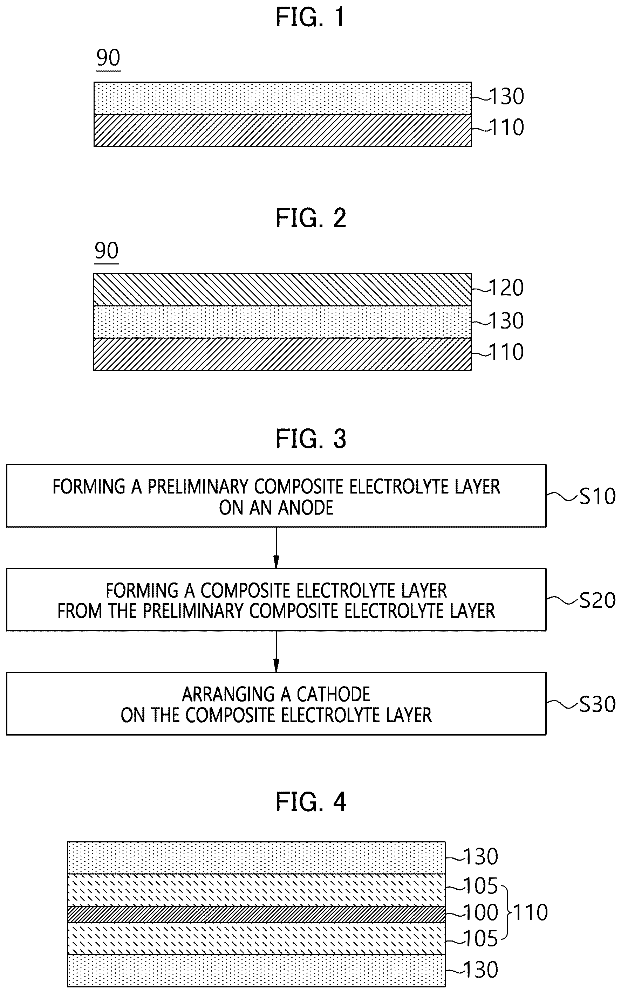

FIG. 1 is a schematic cross-sectional view illustrating an electrode structure for a lithium secondary battery according to example embodiments.

Referring to FIG. 1, the electrode structure for a lithium secondary battery (hereinafter, that may be abbreviated as an 'electrode structure') may include an anode 110 and a composite electrolyte layer 130 formed on the anode 110. For example, the composite electrolyte layer 130 may cover a top surface of the anode 110 and may be in direct contact with the anode 110.

The anode 110 may include an electrode active material capable of intercalating and deintercalating lithium ions.

For example, the anode 110 may include an anode current collector and an anode active material layer formed on at least one surface of the anode current collector. The anode active material layer may include an anode active material, and may further include a conductive material, a binder, or a solid electrolyte.

In an embodiment, the anode 110 may be a lithium electrode formed of a lithium metal or a lithium alloy. For example, the lithium secondary battery may be provided as a lithium metal battery. Elements included in the lithium alloy may include aluminum, zinc, bismuth, cadmium, antimony, silicon, lead, tin, gallium, indium, or the like.

The anode current collector may include gold, stainless steel, nickel, aluminum, titanium, copper, or an alloy thereof, and may include, e.g., copper or a copper alloy.

In some embodiments, the anode active material layer may include at least one selected from the group consisting of a carbon-based active material and a silicon-based active material.

In some embodiments, the carbon-based active material may include at least one selected from the group consisting of a crystalline carbon and an amorphous carbon.

For example, the crystalline carbon may include natural graphite, a graphitized coke, a graphitized MCMB, a graphitized MPCF, etc., and the amorphous carbon may include hard carbon, coke, a mesocarbon microbead (MCMB) fired at 1,500°C or less, a mesophase pitch-based carbon fiber (MPCF), etc.

In some embodiments, the silicon-based active material may include at least one selected from the group consisting of a carbon-silicon composite active material, a silicon oxide (SiOx, 0<x<2) and pure silicon.

For example, the carbon-silicon composite active material may include carbon particles containing micropores therein, and a silicon coating formed at an inside and/or on a surface of the carbon particles. The carbon particles may include activated carbon, carbon nanotube, a carbon nanowire, graphene, a carbon fiber, carbon black, graphite, a porous carbon, a pyrolyzed cryogel, a pyrolyzed xerogel, a pyrolyzed aerogel, etc.

In an embodiment, the anode active material may be mixed and stirred with a binder, a conductive material and/or a dispersant in a solvent to prepare a slurry. The slurry may be coated on an anode current collector, and then pressed and dried to prepare an anode active material layer.

The conductive material may be included to promote electron transfer between the anode active materials. For example, the conductive material may include a carbon-based conductive material such as graphite, carbon black, graphene, carbon nanotube, etc., and/or a metal-based conductive material including tin, tin oxide, titanium oxide, a perovskite material such as LaSrCoO₃ or LaSrMnO₃, etc.

The binder may include an organic binder such as vinylidene fluoride-hexafluoropropylene copolymer (PVDF-HFP), polyvinylidene fluoride (PVDF), polyacrylonitrile, polymethyl methacrylate, PPC-LiTFSI, etc., or an aqueous binder such as SBR, and may be used together with a thickener such as CMC.

According to exemplary embodiments, the composite electrolyte layer 130 may include an oxide-based electrolyte and a polymer electrolyte.

For example, the oxide-based electrolyte has uniform interfacial adhesion with the electrode, and the polymer electrolyte has high electrochemical stability. Thus, a secondary battery including the composite electrolyte layer 130 may have improved capacity properties and life-span properties.

In one embodiment, the oxide-based electrolyte may include a sintered body. For example, the sintered body may be obtained by a photo-sintering or a thermal sintering of the oxide-based electrolyte.

In one embodiment, the sintered body may be obtained by the photo-sintering, and may be obtained by the photo-sintering at, e.g., a temperature ranging from 400°C to 900°C. For example, the photo-sintering may be performed at a temperature ranging from 450°C to 850°C, from 500°C to 800°C, from 550°C to 750°C, from 500°C to 700°C, from 600°C to 800°C, or from 600°C to 700°C.

When the oxide-based electrolyte is photo-sintered within the above temperature range, lithium deficiency and impurity generation due to lithium volatilization may be prevented, crack formation may be suppressed, and interfacial contact between the oxide-based electrolyte and the electrode may be sufficiently achieved. Thus, power properties, capacity properties and life-span properties of the secondary battery may be improved.

In some embodiments, the oxide-based electrolyte may include at least one sintered body selected from the group consisting of an LLZO-based compound, an LLTO-based compound, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, an LAGP-based compound, an LATP-based compound, Li₁₊ₓTi₂₋ₓAlₓSi_{y}(PO₄)_{3-y}(0≤x≤1, 0≤y≤1), LiAlₓZr₂₋ₓ(PO₄)₃ (0≤x≤1, 0≤y≤1), LiTiₓZr₂₋ₓ(PO₄)₃ (0≤x≤1, 0≤y≤1), a LISICON-based compound, a LIPON-based compound, a perovskite-based compound, and a NASICON-based compound.

For example, the sintered body may be an ion-conducting metal compound containing oxygen, and thus may have high ionic and electrical conductivity, thereby improving a conductivity of the composite electrolyte layer 130.

In some embodiments, the polymer electrolyte may be polymerized by including a monomer containing a (meth)acrylate group, and the monomer may include 2 to 6, specifically 2 to 4 of (meth)acrylate groups.

Specifically, the polymer electrolyte may be polymerized by including at least one monomer selected from the group consisting of trimethylolpropane triacrylate, di-trimethylolpropane tetraacrylate, trimethylolpropane ethoxylate triacrylate, butanediol diacrylate, tripropylene glycol diacrylate and trimethylolpropane trimethacrylate.

For example, the polymer electrolyte may be evenly distributed in the oxide-based electrolyte. Thus, stability of the composite electrolyte layer 130 may be further improved and a more stable electrode-electrolyte interface may be formed.

In example embodiments, a volume of the oxide-based electrolyte included in the composite electrolyte layer 130 may be greater than a volume of the polymer electrolyte included in the composite electrolyte layer 130. The volume may refer to a volume-based content.

For example, the composite electrolyte layer 130 may be a free-standing type layer that may maintain a uniform shape without being supported by another substrate, and the oxide-based electrolyte may function as a support or a frame to maintain the shape of the composite electrolyte layer 130.

Thus, if the volume of the oxide-based electrolyte included in the composite electrolyte layer 130 is less than the volume of the polymer electrolyte, the shape of the composite electrolyte layer 130 may collapse. Accordingly, the above-described electrode structure may not be easily prepared, and long-term life-span properties of the lithium secondary battery may be deteriorated.

In some embodiments, the oxide-based electrolyte and the polymer electrolyte may be included in a volume ratio of 55:45 to 90:10.

For example, a mixing volume ratio of the oxide-based electrolyte and the polymer electrolyte included in the composite electrolyte layer 130 may be in a range from 51:49 to 95:5, from 55:45 to 90:10, from 55:45 to 80:20, from 65:35 to 90:10, from 65:35 to 85:15, from 70:30 to 90:10, from 70:30 to 85:15, from 70:30 to 80:20, or from 75:25 to 80:20.

In the above range, the shape of the composite electrolyte layer 130 may be maintained, so that structural stability of the electrode structure, electrode/electrolyte interfacial adhesion and lithium ion conductivity may be improved. Accordingly, the capacity properties, life-span properties and safety of the secondary battery including the composite electrolyte layer 130 may be improved.

For example, if the mixing volume ratio is not within the above-described range, the composite electrolyte layer 130 may rapidly become brittle or ductile.

In some embodiments, a porosity of the composite electrolyte layer 130 may be in a range from 10 vol% to 50 vol%. For example, the porosity of the composite electrolyte layer 130 may be in a range from 5 vol% to 55 vol%, from 10 vol% to 40 vol%, from 15 vol% to 30 vol%, or from 18 vol% to 25 vol%.

For example, the oxide-based electrolyte may have a porous structure. Accordingly, if the porosity satisfies the above-described range, the polymer electrolyte may be evenly distributed in the oxide-based electrolyte, further improving stability of the composite electrolyte layer 130.

For example, the oxide-based electrolyte having the porous structure may be obtained through a photo-sintering.

In some embodiments, the composite electrolyte layer 130 may not contain carbon, and may contain at least one selected from the group consisting of phosphorus, sulfur and fluorine.

In an embodiment, the composite electrolyte layer 130 may not contain carbon, and may contain sulfur.

For example, pores of the oxide-based electrolyte may be filled with the polymer electrolyte containing one or more element selected from the group consisting of phosphorus, sulfur and fluorine.

Thus, in the composite electrolyte layer 130 where the polymer electrolyte is evenly distributed in the oxide-based electrolyte, carbon atoms may not remain, and one or more of the above-mentioned element may be distributed in the pores of the oxide-based electrolyte. Accordingly, electrode/electrolyte interfacial adhesion and lithium ion conductivity may be improved.

For example, when the oxide-based electrolyte is sintered by a light irradiation, carbon volatilization may occur to create the pores, and the polymer electrolyte may be incorporated into the pores.

In some embodiments, the composite electrolyte layer 130 may include a lithium salt and an organic solvent. The lithium salt may provide a path for lithium ion movement within the composite electrolyte layer 130 to further improve the power properties of the secondary battery.

For example, the lithium salt may be at least one selected from the group consisting of LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

For example, the organic solvent may be at least one selected from the group consisting of propylene carbonate (PC), ethylene carbonate (EC), butylene carbonate (BC), diethyl carbonate (DEC), dimethyl carbonate (DMC), ethylmethyl carbonate (EMC), methylpropyl carbonate, dipropyl carbonate (DPC), fluoroethylene carbonate (FEC), difluoroethylene carbonate (DFEC), trifluoroethylene carbonate (TFEC), dimethylsulfoxide, acetonitrile, dimethoxyethane, diethoxyethane, vinylene carbonate, sulfolane, gamma-butyrolactone, propylene sulfite and tetrahydrofuran.

In some embodiments, the anode 110 may include the polymer electrolyte and the lithium salt. For example, at least a portion of the polymer electrolyte included in the composite electrolyte layer 130 may be impregnated into the anode 110.

Accordingly, an interfacial resistance between the anode 110 and the composite electrolyte layer 130 may be further reduced. Further, the anode 110 may include the polymer electrolyte, so that ionic conductivity and energy density within the anode 110 may be further increased.

FIG. 2 is a schematic cross-sectional view of an electrode structure for a secondary battery according to example embodiments.

Referring to FIG. 2, the electrode structure 90 may include the anode 110 and a cathode 120 opposing the anode 110, and the cathode 120 may be disposed on the composite electrolyte layer 130. For example, the cathode 120 may cover a top surface of the composite electrolyte layer 130, and may be in direct contact with the composite electrolyte layer 130.

For example, the cathode 120 may include a cathode current collector and a cathode active material layer formed on at least one surface of the cathode current collector. The cathode active material layer may include a cathode active material capable of intercalating and deintercalating lithium ions, and may further include a conductive material, a binder or a solid electrolyte.

In an embodiment, the cathode 120 may be a lithium electrode formed of a lithium metal or a lithium alloy.

The cathode current collector may include, e.g., stainless steel, nickel, aluminum, titanium, copper or an alloy thereof, and may include, e.g., aluminum or an aluminum alloy.

The cathode active material layer may include a cathode active material. Examples of the cathode active material may include at least one compound selected from a lithium cobalt-based oxide, a lithium manganese-based oxide, a lithium nickel-based oxide, or lithium composite oxide. For example, the cathode active material may include a layered compound such as lithium cobalt oxide (LiCoO₂) or a lithium nickel oxide (LiNiO₂), or a lithium manganese oxide such as LiMnO₃, LiMn₂O₃ or LiMnO₂; a lithium copper oxide (Li₂CuO2); a vanadium oxide, a lithium iron phosphate oxide such as LiV₃O₈, LiFe₃O₄, V₂O₅ and Cu₂VO₇, etc.

In one embodiments, the cathode active material may include a compound having a structure represented by Chemical Formula 1.

[Chemical Formula 1] Li₁₊ₐNi_{1-(x+y)}CoₓM_{y}O₂

In Chemical Formula 1, -0.05≤α≤0.15, 0.01≤x≤0.3, 0.01≤y≤0.3, and M may include at least one element selected from the group consisting of Mn, Mg, Sr, Ba, B, Al, Si, Ti, Zr and W.

In an embodiment, the cathode active material may include nickel (Ni), and may further include at least one of cobalt (Co) and manganese (Mn). For example, a nickel-cobalt-manganese (NCM)-based lithium oxide may be used as the cathode active material.

For example, nickel (Ni) may be provided as a metal related to a capacity of a lithium secondary battery. As a content of nickel increases, the capacity and power of the lithium secondary battery may be improved. However, if the content of nickel increases excessively, life-span may be degraded and mechanical and electrical stability may be lowered.

In an embodiment, a conductivity or a resistance of the lithium secondary battery may be improved by cobalt (Co), and mechanical and electrical stability of the lithium secondary battery may be improved by manganese (Mn).

The chemical structure represented by Chemical Formula 1 shows a bonding relationship included in a lattice structure or a crystal structure of the cathode active material and does not exclude other additional elements.

In an embodiment, a slurry may be prepared by mixing and stirring the cathode active material above with a binder, a conductive material and/or a dispersant in a solvent. The slurry may be coated on the cathode current collector, and pressed and dried to form the cathode active material layer.

Materials substantially the same as or similar to those used in the preparation of the anode active material layer may be used as the binder and the conductive material.

For example, the composite electrolyte layer 130 may mediate movement of ions and electrons between the anode 110 and the cathode 120, so that ion conductivity of the electrode structure 90 may be increased even when the electrode structure 90 is not impregnated with an liquid electrolyte. Thus, power and capacity properties of the secondary battery may be improved.

Additionally, leakage, ignition, and vaporization by the liquid electrolytes may be prevented, and flame retardancy, heat resistance and structural stability of the electrode structure 90 may be improved.

In some embodiments, the electrode structure 90 may not include a separator. The composite electrolyte layer 130 in the free-standing type may block a contact between the anode 110 and the cathode 120, so that a short circuit between the anode 110 and the cathode 120 may be prevented even when the separator is not included.

For example, if the electrode structure 90 includes the separator, a non- capacity region may be formed by the separator, and thus energy density of the electrode structure 90 may be lowered and ion conductivity may also be lowered.

In some embodiments, the electrode structure 90 may not include the separator, capacity and power properties of the lithium secondary battery may be further improved.

In some embodiments, a thickness of the composite electrolyte layer 130 may be in a range from 5 µm to 25 µm.

For example, the thickness of the composite electrolyte layer 130 may be in a range from 1 µm to 50 µm, from 10 µm to 40 µm, from 15 µm to 30 µm, or from 20 µm to 25 µm. In the above ranges, the electrode structure 90 having improved structural stability and ion conductivity may be easily prepared.

FIG. 3 is a schematic process flowchart for describing a method of manufacturing an electrode structure according to embodiments. Hereinafter, a method of manufacturing the electrode structure will be described with reference to FIG. 3.

Referring to FIG. 3, an oxide-based electrolyte composition may be coated on the anode 110. The coated oxide-based electrolyte composition may be sintered to form a preliminary composite electrolyte layer (e.g., in a step of S10).

For example, in the step of forming the preliminary composite electrolyte layer, the sintering may be a thermal sintering or a photo-sintering.

In some embodiments, the forming of the preliminary composite electrolyte layer may include photo-sintering the coated oxide-based electrolyte composition at a temperature in a range from 400°C to 900°C.

For example, the sintering may be performed by applying a light having a wavelength in a range of 100 nm to 700 nm for 1 second to 10 seconds to the oxide-based electrolyte composition. Accordingly, lithium contained in the oxide-based electrolyte may be prevented from being volatilized and high ion and electrical conductivity of the oxide-based electrolyte may be maintained.

The oxide-based electrolyte composition may be photo-sintered at a temperature in, e.g., a range from 450°C to 850°C, from 500°C to 800°C, from 550°C to 750°C, from 500°C to 700°C, from 600°C to 800°C, or from 600°C to 700°C.

In the above temperature range, deficiency of lithium in the oxide-based electrolyte and generation of impurities may be suppressed, so that power and capacity properties of the secondary battery may be improved.

In some embodiments, the oxide-based electrolyte composition may include an oxide-based electrolyte, a binder, and a sintering aid.

In some embodiments, the oxide-based electrolyte composition may further include an organic solvent, a dispersant and a plasticizer.

For example, a content of the oxide-based electrolyte may be in a range from 40 wt% to 60 wt%, from 45 wt% to 60 wt%, from 40 wt% to 55 wt%, from 40 wt% to 50 wt%, from 45 wt% to 55 wt%, or from 45 wt% to 50 wt% based on a total weight of the oxide-based electrolyte composition. In the above range, structural stability and ion conductivity of the electrode structure 90 may be improved.

For example, the binder may include polyvinyl butyrate (PVB), polyvinylidene fluoride (PVDF), etc., the organic solvent may include N-methylpyrrolidone (NMP), toluene, etc., the dispersant may include hypermer KD, etc., the plasticizer may include dibutyl phthalate (DBP), diethylhexyl phthalate (DEHP), etc., and the sintering aid may include lithium nitride (Li₃N).

For example, in a step of S20, a polymer electrolyte composition may be coated on the preliminary composite electrolyte layer to form the composite electrolyte layer 130.

In some embodiments, the forming the composite electrolyte layer may include thermally curing the coated polymer electrolyte composition.

For example, when the polymer electrolyte composition is coated on the preliminary composite electrolyte layer, the liquid polymer electrolyte composition may impregnate the oxide-based electrolyte contained in the preliminary composite electrolyte layer. Thereafter, when the polymer electrolyte composition is cured by a heat treatment, the polymer electrolyte may be inserted into pores of the oxide-based electrolyte.

In some embodiments, the thermal curing for the polymer electrolyte composition may be performed at a temperature in a range from of 50 °C to 80 °C.

For example, the temperature condition of the thermal curing may be in a range from 55 °C to 80 °C, from 60 °C to 80 °C, from 50 °C to 75 °C, from 50 °C to 70 °C, or from 50 °C to 60 °C. In the above range, the polymer electrolyte may be evenly distributed throughout the oxide-based electrolyte.

In an embodiment, the thermal curing may be performed for 30 minutes to 2 hours, for 30 minutes to 1 hour, or from 1 hour to 2 hours.

In some embodiments, the polymer electrolyte composition may include the polymer electrolyte, a lithium salt, and a thermal initiator.

In some embodiments, the polymer electrolyte composition may further include an organic solvent.

For example, a content of the polymer electrolyte may range from 1 wt% to 10 wt%, from 3 wt% to 10 wt%, from 5 wt% to 10 wt%, from 1 wt% to 8 wt%, from 3 wt% to 8 wt%, or from 1 wt% to 5 wt%, based on a total weight of the polymer electrolyte composition. In the above range, electrochemical stability of the electrode structure 90 may be further improved while preventing decrease in ionic conductivity in the electrode structure 90.

Examples of the lithium salt and the organic solvent include compounds of the types as described above.

The thermal initiator may include at least one selected from the group consisting of t-amyl peroxide, benzoyl peroxide, lauroyl peroxide, t-butylperoxypivalate, 1,1'-bis-(bis-t-butylperoxy)cyclohexane, 2,2'-azobisisobutyronitrile, 2,2'-azobis(2,4-dimethylvaleronitrile), 2,2'-azobis-(4-methoxy-2,4-dimethylvaleronitrile), 2-cyano-2-propylazoformamide, 1,1'-azobis(cyclohexane-1-carbonitrile) and 2,2'-azobis(2-methylbutyronitrile).

In some embodiments, a portion of the polymer electrolyte composition coated on the preliminary composite electrolyte layer may be impregnated into the anode 110.

For example, when the polymer electrolyte composition is coated on the preliminary composite electrolyte layer, the polymer electrolyte composition may permeate through the oxide-based electrolyte to reach the anode current collector. Accordingly, the anode 110 may include the polymer electrolyte and the lithium salt to have improved ion conductivity and energy density.

In an embodiment, e.g., a gravure coating, a die coating, a multi-die coating, a dip coating, and a comma coating, etc., may be used as a coating method of the oxide-based electrolyte composition and the polymer electrolyte composition.

For example, in a process of S30, the cathode 120 may be arranged on the composite electrolyte layer 130. For example, while the composite electrolyte layer 130 and the cathode 120 are attached, the anode 110 and the cathode 120 may be pressed with a roll press to perform the above process of S30.

Accordingly, the above-described electrode structure for a secondary battery may be manufactured.

FIG. 4 is a schematic cross-sectional view illustrating a portion of an electrode structure in accordance with example embodiments.

Referring to FIG. 4, the anode 110 may include an anode current collector 100, and an anode active material layer 105 formed on the anode current collector 100. The anode active material layer 105 may be formed on both surfaces (e.g., upper and lower surfaces) of the anode current collector 100.

The composite electrolyte layer 130 may be formed on the anode active material layer 105. For example, the oxide-based electrolyte composition may be applied to the upper surface of the anode active material layer 105, and then cured to form a preliminary composite electrolyte layer. Thereafter, the polymer electrolyte composition may be coated on the preliminary composite electrolyte layer, and then cured to form the composite electrolyte layer 130.

Although only the anode and the composite electrolyte layer are illustrated in FIG. 4 for convenience of descriptions, the cathode may be disposed on the composite electrolyte layer, and the electrode structure may further include the cathode.

The cathode may include a cathode current collector and a cathode active material layer formed on the cathode current collector, and the cathode active material layer may be formed on both surfaces (e.g., upper and lower surfaces) of the cathode current collector.

For example, electrode tabs (a cathode tab and an anode tab) may protrude from the cathode current collector and the anode current collector, respectively, and may extend to one side portion of a case of the secondary battery. The electrode tabs may be fused together with the one side portion of the case to form electrode leads (a cathode lead and an anode lead) extending or exposed to an outside of the case.

A lithium secondary battery according to embodiments may include the above-described electrode structure. For example, the lithium secondary battery may be provided as an all-solid battery.

According to embodiments, an electrode cell may be defined by the above-described electrode structure, and a plurality of the electrode cells may be stacked to form an electrode assembly.

In an embodiment, the separator may not be interposed between the cathode and the anode, and a plurality of the electrode structures may be laminated to form an electrode assembly. Accordingly, a space for winding and folding of the separator is not required, and an internal space efficiency of the electrode assembly may be improved to increase the capacity.

The electrode assembly may be accommodated in a case to define a lithium secondary battery. The lithium secondary battery may be manufactured in, e.g., a cylindrical shape using a can, a prismatic shape, a pouch shape, or a coin shape.

Hereinafter, preferred embodiments are presented to promote the understanding of the present disclosure, but these embodiments are merely provided as examples of the present disclosure, and are not intended to limit the scope of the attached claims. It is clear to those skilled in the art that various changes and modifications to the embodiments can be made within the scope of the present disclosure and technical ideas, and it is obvious for these modifications and modifications to fall within the scope of the attached claims.

### Preparation Example

### (1) Preparation of Oxide-Based Electrolyte Composition

0.1 g of BH-S (polyvinyl butyrate (PVB)-based) as a binder, 0.1 g of Hypermer KD-6 (product from Croda) as a dispersant, and 0.1 g of dibutyl phthalate (DBP) as a plasticizer were added to a solvent in which 0.51 g of NMP and 0.79 g of toluene were mixed. The mixture was stirred twice at 3,000 rpm for 5 minutes using a thinky mixer to obtain a stirred solution.

To the resulting stirred solution, 1.5 g of LLZO (Li_{6.4}La₃Zr_{1.4}Ta_{0.6}O₁₂) powder and 0.015 g of lithium nitride (Li₃N) as a sintering aid were added. The mixture was stirred at 3,000 rpm for 5 minutes to prepare an oxide-based electrolyte composition.

### (2) Preparation of Polymer Electrolyte Composition

A polymer electrolyte composition was prepared by adding 5 wt% of trimethylolpropane ethoxylate triacrylate (TMPETA), 1 wt% of t-butylperoxypivalate (t-BPP), 16.9 wt% of LiTFSI, 2.1 wt% of LiDFOB, and 0.6 wt% of LiPF₆ to a solvent containing 50.7 wt% of EMC and 23.7 wt% of FEC.

### (3) Fabrication of Anode

An anode slurry was prepared by mixing artificial graphite as an active material, carbon nanotube (CNT) as a conductive material, and SBR as a binder in a weight ratio of 92:5:3. The anode slurry was coated on a 15 µm-thick Cu foil, and then dried and pressed to prepare an anode.

### (4) Fabrication of Cathode

A cathode slurry was prepared by mixing Li[Ni_{0.6}Co_{0.2}Mn_{0.2}]O₂ as an active material, carbon black as a conductive material, and polyvinylidene fluoride (PVdF) as a binder in a weight ratio of 92:5:3. The cathode slurry was uniformly coated on a 15 µm-thick aluminum foil and vacuum-dried at 130°C. The dried slurry was pressed to prepare the cathode.

### Example 1

The oxide-based electrolyte composition was coated on the anode and sintered by irradiating UV and visible light for 5 seconds using a photo-sintering device (PulseForge, model name: Invent, operating voltage 300 V, pulse duration 3000 µs, pulse count 10, duty cycle 62%, 20 Hz, 100 times repetition), and heat-treated to 600°C. Thereafter, drying was performed at 85°C for 2 hours to form a preliminary composite electrolyte layer containing an oxide-based electrolyte.

Thereafter, 30 µL of the polymer electrolyte composition was coated on the preliminary composite electrolyte layer and left at 60°C for 1 hour to form a composite electrolyte layer.

The electrode structure fabricated with the composite electrolyte layer and the cathode facing each other, was assembled into a cell outer case.

### Comparative Example 1

A preliminary composite electrolyte layer including an oxide-based electrolyte, a composite electrolyte layer, and an electrode structure were fabricated using the same method as that in Example 1, except that the oxide-based electrolyte composition coated on the anode was not sintered by irradiation of ultraviolet and visible light.

The fabricated electrode structure was assembled into a cell outer case.

### Comparative Example 2

A preliminary composite electrolyte layer including an oxide-based electrolyte, a composite electrolyte layer in which a volume ratio of the polymer electrolyte was greater than that of the oxide-based electrolyte, and an electrode structure was fabricated by the same method as that in Example 1, except that 300 µL of the polymer electrolyte composition was applied instead of 30 µL on the preliminary composite electrolyte layer.

The manufactured electrode structure was assembled into a cell outer case.

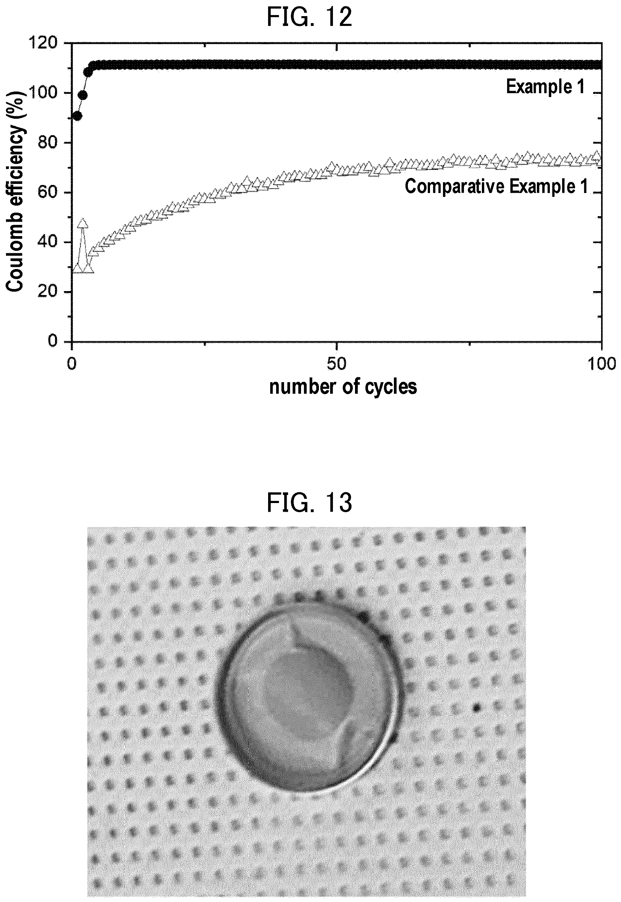

FIG. 13 is a photograph of an electrode structure of Comparative Example 2.

As confirmed in FIG. 13, the shape of the electrode structure of Comparative Example 2 which had a higher volume ratio of the polymer electrolyte was not maintained, and further evaluation was not conducted.

### Experimental Example

### 1. SEM Image Analysis of Electrode Cross-Section

SEM (scanning electron microscope) images of cross-sections of the manufactured electrode structures were obtained using a scanning electron microscope (SU-8010, HITACHI).

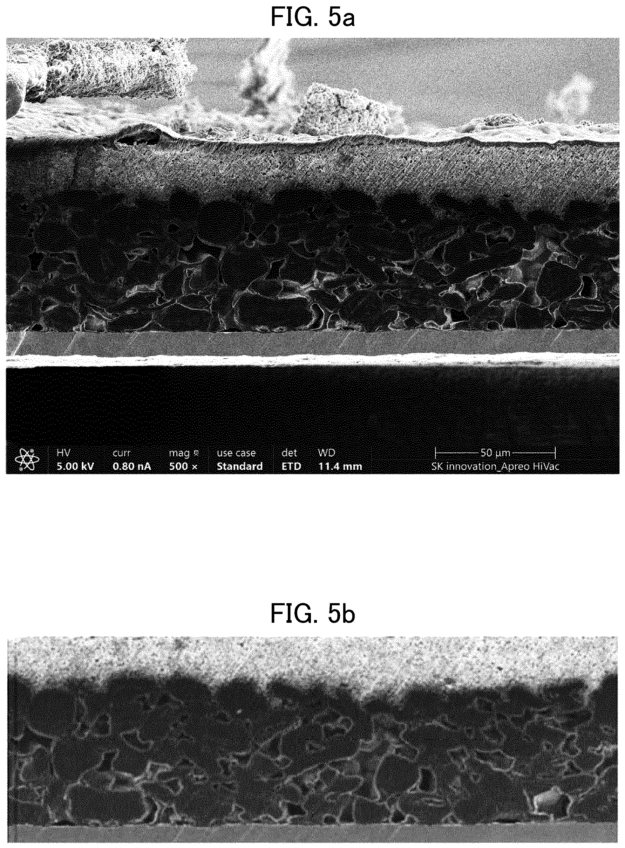

FIGS. 5a and 5b are SEM images of cross-sections of an anode and a composite electrolyte layer of an electrode structure according to Example 1.

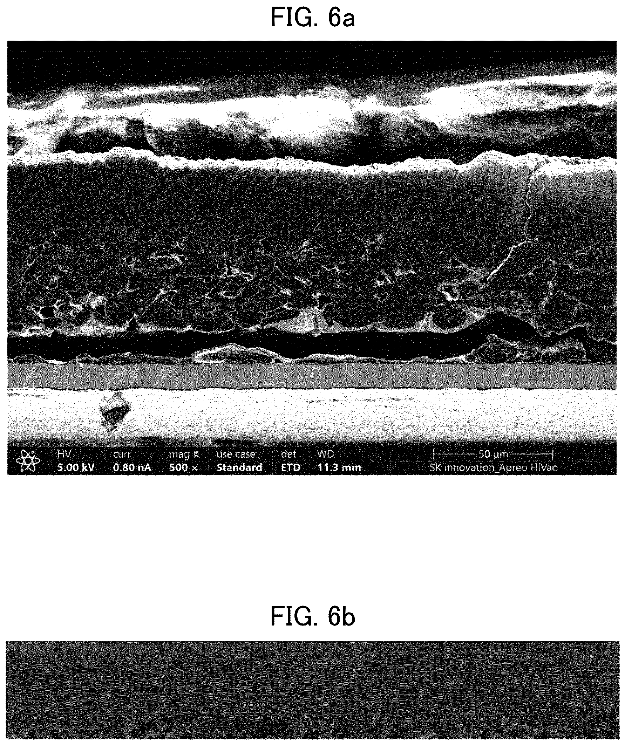

FIGS. 6a and 6b are SEM images of cross-sections of an anode and composite electrolyte layer of an electrode structure according to Comparative Example 1.

Referring to FIGS. 5a, 5b, 6a and 6b, the composite electrolyte layer (thickness: 23.32 µm) of Example 1 had a porous structure, and the composite electrolyte layer (thickness: 28.28 µm) of Comparative Example 1 had a dense structure.

Accordingly, from the composite electrolyte layer of Example 1, it is confirmed that the polymer electrolyte can sufficiently penetrate through the pores of the oxide-based electrolyte.

### 2. EDS Elemental Mapping Image Analysis of Electrode Cross-Section

Element distribution (carbon (C), sulfur (S), zirconium (Zr), and oxygen (O)) of the cross-section of the fabricated electrode structure was confirmed using an energy dispersive spectroscopy (EDS).

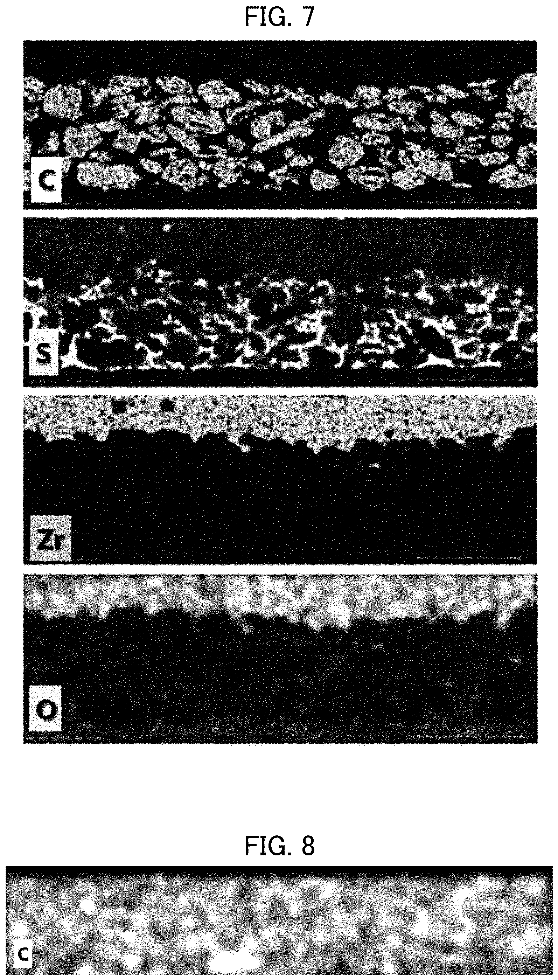

FIG. 7 shows results of an EDS analysis of C, S, Zr and O from a cross-section of an anode and a composite electrolyte layer of an electrode structure according to Example 1.

FIG. 8 shows results of an EDS analysis of C from a cross-section of an anode and a composite electrolyte layer of an electrode structure according to Comparative Example 1.

Referring to FIG. 7, no carbon element was detected in the composite electrolyte layer of Example 1, indicating that carbon volatilization occurred during the sintering by visible light irradiation. Furthermore, sulfur elements were detected in the pores of the oxide-based electrolyte, indicating that the polymer electrolyte was evenly distributed throughout the oxide-based electrolyte.

Referring to FIG. 8, carbon elements were detected in the composite electrolyte layer of Comparative Example 1, indicating that carbon volatilization did not occur and binder components remained.

Thus, stability and lithium ion conductivity of the composite electrolyte layer of Example 1 were improved, and a more stable electrode-electrolyte interface could be formed.

### 3. Porosity Evaluation

Porosity analysis was performed on the composite electrolyte layer included in the electrode structure of Example 1 using Image J software. From the SEM image obtained from the cross-section of the composite electrolyte layer, the porosity was measured by calculating a pore area as a percentage of the composite electrolyte layer area.

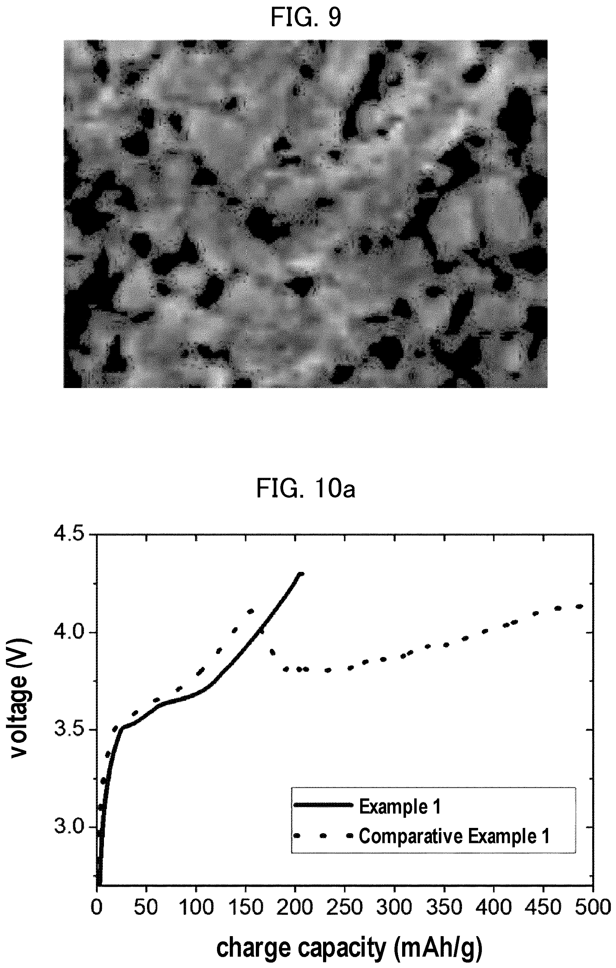

FIG. 9 is an SEM image of a cross-section of a composite electrolyte layer of an electrode structure according to Example 1.

In FIG. 9, the pores of the oxide-based electrolyte are highlighted in red regions, and the measured porosity value is 18%. Accordingly, the mixing volume ratio of the oxide-based electrolyte and the polymer electrolyte in the composite electrolyte layer of Example 1 is assumed as being 80:20.

### 3. Evaluation on Initial Formation Process Property

A formation process (initial charge-discharge process) was performed to activate the fabricated cell by providing electrical properties. Based on the current density of the first electrode, the formation process was performed at room temperature, repeating charge (CC-CV 0.1C, 4.3 V cut-off) and discharge (CC 0.1C, 2.7 V cut-off) twice.

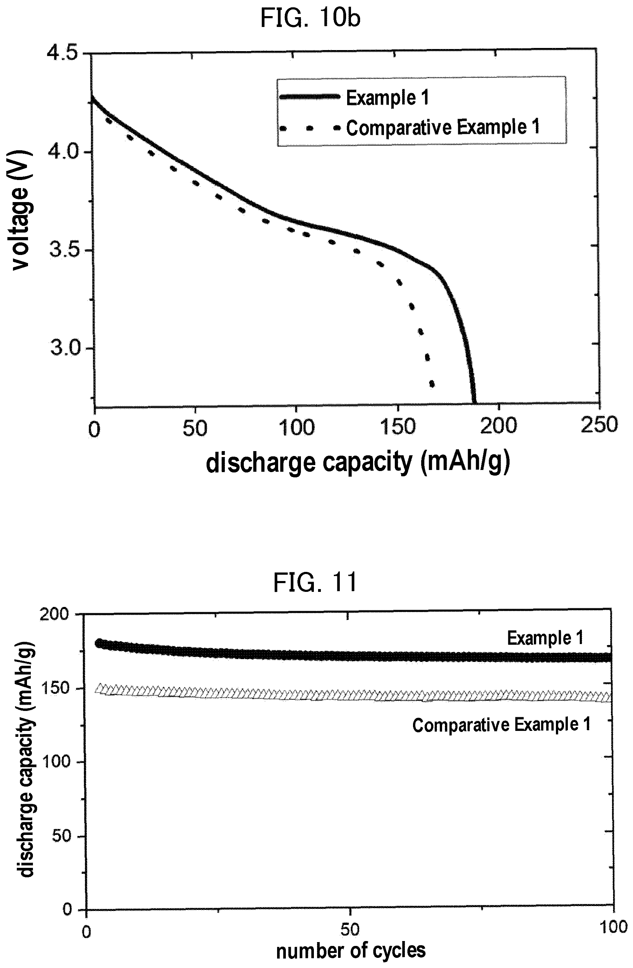

During the first charge/discharge cycle of the above-described formation process, a charge curve is shown in FIG. 10a, and a discharge curve is shown in FIG. 10b.

Referring to FIG. 10a, the charge curve of the lithium secondary battery cell according to Example 1 increased more steadily than that of the lithium secondary battery cell according to Comparative Example 1.

Referring to FIG. 10b, the discharge capacity of the lithium secondary battery cell according to Example 1 was close to a theoretical capacity of the cathode (180 mAh/g), while the discharge capacity of the lithium secondary battery cell according to Comparative Example 1 was further decreased.

### 4. Evaluation on Life-span Property

Constant current charge/discharge evaluation was performed on the cells after the formation process. Based on the current density of the first electrode, charge (CC-CV 0.5C, 4.3 V cutoff) and discharge (CC 0.5C, 2.7 V cutoff) at room temperature were set as one cycle, the discharge and charge capacities were measured for each cycle.

A life-span property were evaluated as a percentage of the discharge capacity measured at the 100th cycles divided by a discharge capacity measured at the 1st cycle.

The measurement results are shown in FIG. 11 and Table 1 below.

### 5. Evaluation on Initial Efficiency

The cells after the formation process were charged (CC-CV 0.5C, 4.3 V cut-off) and discharged (CC 0.5C, 2.7 V cut-off) at room temperature. Thereafter, 100 cycles of the same charge and discharge were performed at room temperature, and an initial efficiency was evaluated as a ratio of the first discharge capacity to the first charge capacity.

The measurement results are shown in FIG. 12 and Table 1 below.

**[Table 1]**

| | initial discharge capacity (mAh/g) | 100 cycles discharge capacity (mAh/g) | capacity retention (100 cycles, %) | initial Coulomb efficiency (%) |
|---|---|---|---|---|
| Example 1 | 180.55 | 167.18 | 92.59 | 90.81 |
| Comparative Example 1 | 149.24 | 139.60 | 93.54 | 24.43 |

Referring to Table 1, the lithium secondary battery cell according to Example 1 provided higher discharge capacity and initial Coulomb efficiency, and lower capacity retention than those from the lithium secondary battery cell according to Comparative Example 1.

In the composite electrolyte layer according to Example 1, the polymer electrolyte was inserted into the pores of the oxide-based electrolyte, thereby improving electrode/electrolyte interfacial adhesion and lithium ion conductivity, and enhancing the power and capacity properties of the lithium secondary battery cell.

Further, the lithium secondary battery cells according to Example 1 and Comparative Example 1, which were subjected to the constant current charge/discharge evaluation by 100 cycles as described in "4. Evaluation on Life-span Property", were continuously charged and discharged.

As a result, the discharge capacity of the lithium secondary battery cell according to Example 1 was higher than that of the lithium secondary battery cell according to Comparative Example 1 even after 400 to 500 cycles of the operation.

## Claims

1. An electrode structure for a secondary battery, comprising:
an anode; and
a composite electrolyte layer formed on the anode, and comprising an oxide-based electrolyte and a polymer electrolyte,
wherein the oxide-based electrolyte comprises a sintered body, and
a volume of the oxide-based electrolyte contained in the composite electrolyte layer is greater than a volume of the polymer electrolyte contained in the composite electrolyte layer.

2. The electrode structure for a secondary battery of claim 1, wherein the oxide-based electrolyte and the polymer electrolyte are contained in a volume ratio of 55:45 to 90: 10.

3. The electrode structure for a secondary battery according to claim 1, wherein the oxide-based electrolyte comprises at least one sintered body selected from the group consisting of an LLZO-based compound, an LLTO-based compound, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, an LAGP-based compound, a LATP-based compound, Li₁₊ₓTi₂₋ₓAlₓSi_{y}(PO₄)_{3-y} (0≤x≤1, 0≤y≤1), LiAlₓZr₂₋ₓ(PO₄)₃ (0≤x≤1, 0≤y≤1), LiTiₓZr₂₋ₓ(PO₄)₃ (0≤x≤1, 0≤y≤1), a LISICON-based compound, a LIPON-based compound, a perovskite-based compound and a NASICON-based compound.

4. The electrode structure for a secondary battery of claim 1, wherein the polymer electrolyte is polymerized by including a monomer containing a (meth)acrylate group.

5. The electrode structure for a secondary battery of claim 1, wherein the polymer electrolyte is polymerized by including at least one monomer selected from the group consisting of trimethylolpropane triacrylate, di-trimethylolpropane tetraacrylate, trimethylolpropane ethoxylate triacrylate, butanediol diacrylate, tripropylene glycol diacrylate and trimethylolpropane trimethacrylate.

6. The electrode structure for a secondary battery of claim 1, wherein a porosity of the composite electrolyte layer is in a range from 10 vol% to 50 vol%.

7. The electrode structure for a secondary battery of claim 1, wherein the composite electrolyte layer does not contain carbon, and contains at least one element selected from the group consisting of phosphorus, sulfur and fluorine.

8. The electrode structure for a secondary battery of claim 1, wherein the anode comprises an anode current collector, and an anode active material layer formed on the anode current collector.

9. The electrode structure for a secondary battery of claim 8, wherein the anode active material layer comprises at least one element selected from the group consisting of a carbon-based active material and a silicon-based active material.

10. The electrode structure for a secondary battery of claim 9, wherein the carbon-based active material comprises at least one element selected from the group consisting of a crystalline carbon and an amorphous carbon.

11. The electrode structure for a secondary battery of claim 9, wherein the silicon-based active material comprises at least one selected from the group consisting of a carbon-silicon composite active material, silicon oxide (SiOx, 0<x<2) and pure silicon.

12. A method of manufacturing an electrode structure for a secondary battery, comprising:
coating an oxide-based electrolyte composition on an anode;
forming a preliminary composite electrolyte layer by sintering the coated oxide-based electrolyte composition; and
forming a composite electrolyte layer by coating a polymer electrolyte composition on the preliminary composite electrolyte layer.

13. The method of manufacturing an electrode structure for a secondary battery of claim 12, wherein forming the preliminary composite electrolyte layer comprises photo-sintering the coated oxide-based electrolyte composition at a temperature ranging from 400°C to 900°C.

14. The method for manufacturing an electrode structure for a secondary battery according to claim 12, wherein forming the composite electrolyte layer comprises thermally curing the coated polymer electrolyte composition.

15. The method for manufacturing an electrode structure for a secondary battery according to claim 14, wherein thermally curing the polymer electrolyte composition is performed at a temperature of 50°C to 80°C.

16. The method for manufacturing an electrode structure for a secondary battery according to claim 12, wherein a portion of the polymer electrolyte composition coated on the preliminary composite electrolyte layer is impregnated into an inside of the anode.

17. The method for manufacturing an electrode structure for a secondary battery according to claim 12, wherein the oxide-based electrolyte composition comprises an oxide-based electrolyte, a binder and a sintering aid.

18. The method for manufacturing an electrode structure for a secondary battery according to claim 12, wherein the polymer electrolyte composition comprises a polymer electrolyte, a lithium salt and a thermal initiator.

19. The method for manufacturing an electrode structure for a secondary battery according to claim 12, further comprising arranging a cathode on the composite electrolyte layer.
